# EUROPEAN PATENT APPLICATION

(11) **EP 4 825 679 A1**
(43) Date of publication of application: **21.10.2026**
(21) Application number: 25849919.3
(22) Date of filing: 11.03.2025
(51) Int. Cl.: B60W 20/15

(54) **ELECTRIC BALANCE CONTROL METHOD AND APPARATUS FOR HYBRID VEHICLE, AND DEVICE AND STORAGE MEDIUM**

(30) Priority: 05.08.2024 CN 202411066089
(71) Applicant: Chery Automobile Co., Ltd., Wuhu, Anhui 241006 (CN)
(72) Inventor: WANG, Leiming, Wuhu, Anhui 241006 (CN); SONG, Mingzhen, Wuhu, Anhui 241006 (CN)
(74) Representative: Adamson Jones
(86) International application number: PCT/CN2025/081902
(87) International publication number: WO 2026/031548

(57) **Abstract**

An electric balance control method and apparatus for a hybrid vehicle, and a device and a storage medium, which relate to the technical field of vehicles. The method comprises: when a hybrid vehicle is in a traveling state, on the basis of state information of the hybrid vehicle, obtaining a charging coefficient of the hybrid vehicle, wherein the charging coefficient is used for indicating the charging efficiency of the hybrid vehicle (210); on the basis of the charging coefficient, limiting original generated power of the hybrid vehicle, so as to obtain first generated power (220); on the basis of an engine speed of the hybrid vehicle, limiting the first generated power, so as to obtain second generated power (230); and on the basis of the second generated power and the engine speed, determining a torque gradient of the hybrid vehicle, wherein the hybrid vehicle is used for traveling on the basis of the second generated power and the torque gradient (240). Generated power is determined on the basis of state information of a hybrid vehicle, and road condition information of the vehicle is taken into consideration in real time, thereby optimizing the electric balance performance of the hybrid vehicle under various road conditions, and improving the performance of the vehicle.

## Description

The present disclosure claims priority to Chinese Patent Application No. 202411066089.1, filed August 5, 2024, and entitled "ELECTRIC BALANCE CONTROL METHOD, DEVICE AND EQUIPMENT OF HYBRID VEHICLE AND STORAGE MEDIUM", the entire contents of which are incorporated herein by reference.

### TECHNICAL FIELD

The present disclosure relates to the technical field of vehicles, and particularly to an electric balance control method and apparatus for a hybrid vehicle, and a device and a storage medium thereof.

### BACKGROUND

The current technology is developed and applied in hybrid vehicles, including the hybrid vehicle (HEV) and the plug-in hybrid electric vehicle (PHEV), and can quickly identify the traveling scenarios of vehicles, address the issue of electric balance anxiety, and enable the entire vehicle to achieve better performance.

In related technologies, the power consumption and performance of hybrid vehicles can be balanced through various methods. Firstly, the rational use of driving modes is crucial. When the state of charge (SOC) is high and the traveling environment supports, prioritizing the use of pure electric traveling mode can minimize power consumption to the greatest extent. However, when higher power output is required or the SOC is low, switching to the fuel driving mode or hybrid mode can ensure the power performance of the vehicle. Secondly, the application of intelligent energy management systems is also an important means to balance the power consumption and performance. The intelligent energy management system equipped in hybrid vehicles can automatically adjust energy distribution and driving modes based on factors such as the vehicle traveling state, the battery SOC, and the driver's needs, achieving the optimal balance between the power consumption and performance. In addition, regular maintenance is crucial for maintaining the performance and efficiency of hybrid vehicles. This includes checking the battery state, replacing aged battery components, etc., to ensure the performance and efficiency of the vehicle. Lastly, driving habits also have a significant impact on the power consumption and performance of hybrid vehicles. For example, smooth driving, avoiding sudden acceleration and braking, etc., can reduce unnecessary energy consumption and improve energy utilization efficiency.

However, the aforementioned electric balance control method does not take into account the driving conditions of the vehicle, as different driving conditions can affect the electric balance control of the vehicle.

### SUMMARY

Embodiments of the present disclosure provide an electric balance control method and apparatus for a hybrid vehicle, and a device and a storage medium thereof. The technical solutions provided by the embodiments of the present disclosure are as follows.

According to one aspect of embodiments of the present disclosure, an electric balance control method for a hybrid vehicle is provided. The method is performed by a server, and includes: obtaining a charging coefficient of the hybrid vehicle based on state information of the hybrid vehicle when the hybrid vehicle is traveling, wherein the charging coefficient is indicative of a charging efficiency of the hybrid vehicle; limiting an original generation power of the hybrid vehicle based on the charging coefficient to obtain a first generation power, wherein the original generation power is determined based on a required power of the hybrid vehicle, the required power being determined based on an opening degree of an accelerator pedal of the hybrid vehicle; limiting the first generation power based on an engine speed of the hybrid vehicle to obtain a second generation power, wherein the engine speed is determined based on a traveling speed of the hybrid vehicle and the opening degree of the accelerator pedal; and determining a torque gradient of the hybrid vehicle from the second generation power and the engine speed, wherein the hybrid vehicle is configured to travel based on the second generation power and the torque gradient.

According to one aspect of the embodiments of the present disclosure, an electric balance control apparatus for a hybrid vehicle is provided. The apparatus includes: a coefficient determination module, configured to obtain a charging coefficient of the hybrid vehicle based on state information of the hybrid vehicle when the hybrid vehicle is traveling, wherein the charging coefficient is indicative of a charging efficiency of the hybrid vehicle; a first determination module, configured to limit an original generation power of the hybrid vehicle based on the charging coefficient to obtain a first generation power, wherein the original generation power is determined based on a required power of the hybrid vehicle, the required power being determined based on an opening degree of an accelerator pedal of the hybrid vehicle; a second determination module, configured to limit the first generation power based on an engine speed of the hybrid vehicle to obtain a second generation power, wherein the engine speed is determined based on a traveling speed of the hybrid vehicle and the opening degree of the accelerator pedal; and a gradient determination module, configured to determine a torque gradient of the hybrid vehicle from the second generation power and the engine speed, wherein the hybrid vehicle is configured to travel based on the second generation power and the torque gradient.

According to one aspect of embodiments of the present disclosure, a server is provided. The server includes a processor and a memory. The memory stores one or more computer programs, which are loaded and run by the processor, to cause the processor to perform the electric balance control method for the hybrid vehicle.

According to one aspect of the embodiments of the present disclosure, a computer-readable storage medium is provided. The computer-readable storage medium stores one or more computer programs, wherein the one or more computer programs, when loaded and run by a processor, cause the processor to perform the electric balance control method for the hybrid vehicle.

According to one aspect of the embodiments of the present disclosure, a computer program product is provided. The computer program product includes one or more computer programs, which are loaded and run by a processor, cause the processor to perform the electric balance control method for the hybrid vehicle.

The technical solutions according to the embodiments of the present disclosure can achieve the following beneficial effects.

When the hybrid vehicle is traveling, the state information of the hybrid vehicle is promptly obtained, and the optimal power generation output of the hybrid vehicle is determined based on the state information of the hybrid vehicle. Compared to the electric balance control methods in related technologies, which do not consider the driving conditions of the vehicle, the generation power is determined based on the state information of the hybrid vehicle in the present disclosure, taking into account the real-time road condition information. This optimizes the electric balance performance of the hybrid vehicle under various road conditions and enhances the performance of the vehicle. Furthermore, based on the output generation power and the engine speed of the hybrid vehicle, the torque gradient is determined to enable the engine torque of the hybrid vehicle to reach the target torque as soon as possible, thereby improving the power-generation efficiency of the hybrid vehicle and achieving better performance for the vehicle.

### BRIEF DESCRIPTION OF DRAWINGS

FIG. 1 is a schematic diagram of an implementation environment of a solution according to some embodiments of the present disclosure;
FIG. 2 is a flowchart of an electric balance control method for a hybrid vehicle according to some embodiments of the present disclosure;
FIG. 3 is a schematic diagram of vehicle states under different road conditions according to some embodiments of the present disclosure;
FIG. 4 is a block diagram of an electric balance control apparatus for a hybrid vehicle according to some embodiments of the present disclosure; and
FIG. 5 is a structural block diagram of a server according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

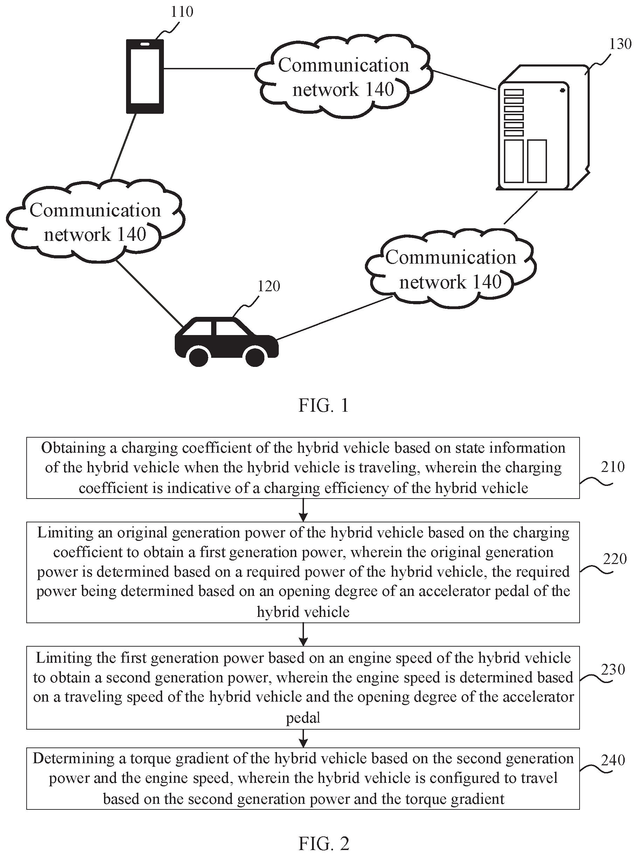

Referring to FIG. 1, FIG. 1 illustrates a schematic diagram of an implementation environment of a solution according to some embodiments of the present disclosure. This implementation environment of the solution may be implemented as an electric balance control system for the hybrid vehicle. The implementation environment of the solution may include: a terminal device 110, a hybrid vehicle 120, and a server 130.

The terminal device 110 includes but is not limited to electronic devices such as vehicle terminals, mobile phones, tablet computers, laptops, desktop computers, smart television, multimedia playback devices, vehicle terminals, servers, intelligent robots, and the like.

The hybrid vehicle 120 refers to a vehicle whose drive system is composed of two or more individual drive systems that can operate simultaneously. The traveling power of the vehicle is provided by individual drive systems either separately or by the drive systems jointly, depending on the actual traveling state of the vehicle. Generally, the hybrid vehicle 120, including but not limited to the HEV, the PHEV, and other vehicles, uses a traditional internal combustion engine (diesel engine or gasoline engine) and an electric motor as its power sources. The hybrid vehicle 120 includes a vehicle control unit (VCU) and a body control module (BCM). The VCU is the core control component of the hybrid vehicle, and is responsible for controlling key tasks of the entire vehicle. The VCU receives the driver's operational intention by capturing signals from the accelerator pedal, brake pedal, gear position, and the like, calculates the torque required by the hybrid vehicle by monitoring relevant information from the battery management system (BMS) and motor control system (MCU) on the powertrain system, and then transmits instructions to the MCU through the signal line to achieve normal traveling of the hybrid vehicle. The BCM is an electronic control unit (ECU) responsible for managing vehicle drive, vehicle anti-theft, vehicle detection, and other related functions. For example, the BCM is responsible for managing vehicle functions such as lighting, windows, door locks, and seat control. The BCM is connected to the VCU through the signal line to receive vehicle information transmitted by the VCU through the signal line.

The server 130 may be a standalone physical server, a server cluster or distributed system composed of multiple physical servers, or a cloud server providing basic cloud computing services such as cloud computing services, cloud databases, cloud computing, cloud functions, cloud storage, network services, cloud communication, middleware services, domain name services, security services, content delivery network (CDN), big data and artifact intelligence platforms. The cloud server for the big data and artifact intelligence platform can provide artifact intelligence cloud services.

The terminal device 110 may be the control system of the hybrid vehicle 120, used to control the hybrid vehicle 120 to perform target operations (such as light control, parking, window closing, starting, and the like). Illustratively, the terminal device 110 is provided with a client running a target application, and the target application includes at least one of a vehicle control application, an instant messaging application, navigation application (such as map applications), or other applications with vehicle control functions. This is not limited in the embodiments of the present disclosure. Additionally, the form of the target application is not limited in the present disclosure, which may be an application that needs to be downloaded and installed, or a click-to-run application, including but not limited to an application (App) and mini-program installed in the terminal device 110. The target application may also be in the form of a webpage.

The server 130 is used to provide background services for the client of the target application installed and running on the terminal device 110. For example, the server 130 is the background server of the aforementioned target application.

The hybrid vehicle 120 and the server 130 may be interconnected through the communication network 140. Specifically, the VCU of the hybrid vehicle 120 and the server 130 may be interconnected through the communication network 140. The terminal device 110 and the server 130 may be interconnected through the communication network 140, and the hybrid vehicle 120 and the terminal device 110 may also be interconnected through the communication network 140. Optionally, this communication network may be a wired network or a wireless network.

In embodiments of the present disclosure, a user may select a vehicle mode of the hybrid vehicle 120 through the terminal device 110, or directly select a vehicle mode on the hybrid vehicle 120. After the hybrid vehicle 120 is traveling, the server 130 promptly acquires state information of the hybrid vehicle 120 and determines the charging coefficient of the hybrid vehicle 120 based on the state information of the hybrid vehicle 120. Then, the original generation power of the hybrid vehicle 120 is limited based on the charging coefficient of the hybrid vehicle 120 and the engine speed of the hybrid vehicle 120, resulting in an optimal generation power. The server 130 also determines the torque gradient based on the optimal generation power and the engine speed of the hybrid vehicle 120, so that the VCU may request the torque controlled by the ECU to reach a target, thereby improving power-generation efficiency.

Refer to FIG. 2, FIG. 2 illustrates a flowchart of an electric balance control method for a hybrid vehicle according to some embodiments of the present disclosure. The executing entity of each step of the method may be a server. The method may include at least one of the following steps 210 to 240.

Step 210: When the hybrid vehicle is traveling, a charging coefficient of the hybrid vehicle is obtained based on state information of the hybrid vehicle, wherein the charging coefficient is indicative of a charging efficiency of the hybrid vehicle.

The hybrid vehicle being traveling refers to the state where the hybrid vehicle is traveling on the road after being started. The charging coefficient is indicative of the charging efficiency of the hybrid vehicle. The higher the charging efficiency of the hybrid vehicle, the larger the charging coefficient; conversely, the lower the charging efficiency of the hybrid vehicle, the smaller the charging coefficient.

The state information of the hybrid vehicle is indicative of the traveling state of the hybrid vehicle. In some embodiments, the state information of the hybrid vehicle includes at least one of the following: the engine speed of the hybrid vehicle, the gradient of the road condition of the hybrid vehicle, the traveling speed of the hybrid vehicle, the actual SOC of the hybrid vehicle, the target SOC of the hybrid vehicle, or the cell temperature of the hybrid vehicle.

The road condition of the hybrid vehicle is indicative of the gradient condition of the road where the hybrid vehicle is traveling, including but not limited to urban roads, suburban roads, national highways, expressways, mountain roads, and winter road conditions. Different road conditions correspond to different gradient conditions, and the same road may have different road conditions, that is, different gradients. Alternatively, the real-time gradient of the hybrid vehicle being traveling may be obtained through a gradient sensor installed on the vehicle.

The traveling speed of the hybrid vehicle may also be referred to as the vehicle speed of the hybrid vehicle. In embodiments of the present disclosure, the traveling speed of the hybrid vehicle refers to the actual vehicle speed of the hybrid vehicle, not the vehicle speed displayed on the instrument panel of the hybrid vehicle. Generally, the actual vehicle speed of the hybrid vehicle is greater than or equal to the vehicle speed displayed on the instrument panel, and as the vehicle speed increases, the difference between the actual vehicle speed of the hybrid vehicle and the vehicle speed displayed on the instrument panel becomes larger. Optionally, the traveling speed of the hybrid vehicle is obtained by monitoring data during vehicle traveling with a sensor, which may be an anti-lock braking system (ABS) sensor, typically installed on the wheel. For example, the traveling speed of the hybrid vehicle is calculated based on the number of wheel revolutions, wheel diameter, and time.

The cell temperature of the hybrid vehicle refers to the temperature of the cell of the hybrid vehicle power battery under different traveling conditions.

The actual SOC of the hybrid vehicle refers to the remaining SOC when the vehicle is traveling.

The target SOC of the hybrid vehicle indicates the desired SOC that the hybrid vehicle aims to achieve under the current road conditions. The relationship between the target SOC of the hybrid vehicle and road conditions may be referred to in Table 1 below.

**Table 1**

| | Target SOC |
|---|---|
| Uphill | maintain the status quo |
| Downhill | Original target SOC - δ |
| Flat road | maintain the status quo |

According to Table 1 above, it can be seen that when the hybrid vehicle is in an uphill road condition, the target SOC of the hybrid vehicle remains unchanged, that is, when the gradient of the road condition of the hybrid vehicle is increasing, the target SOC of the hybrid vehicle remains unchanged. When the hybrid vehicle is in a downhill road condition, the target SOC of the hybrid vehicle is equal to the original target SOC of the hybrid vehicle minus δ, that is, when the gradient of the road condition of the hybrid vehicle is decreasing, the target SOC of the hybrid vehicle decreases. Herein, δ represents a quantitative value, and the value of δ is not limited in the present disclosure and is set by the vehicle technician according to the vehicle condition. When the hybrid vehicle is in a flat road condition, the target SOC of the hybrid vehicle remains unchanged, that is, when the gradient of the road condition of the hybrid vehicle remains unchanged, the target SOC of the hybrid vehicle remains unchanged.

The target SOC is related to the vehicle mode of the hybrid vehicle. In some embodiments, the original target SOC of the hybrid vehicle is determined based on the vehicle mode of the hybrid vehicle. The vehicle mode includes at least one of the following: the power mode of the hybrid vehicle, the power-maintaining mode of the hybrid vehicle, or the traveling mode of the hybrid vehicle.

The vehicle mode of the hybrid vehicle is related to the design form of the hybrid vehicle. Different hybrid vehicles may have the same or different vehicle modes. The original target SOCs corresponding to different vehicle modes may be the same or different, depending on the design forms and performance states of the hybrid vehicles.

The power mode of the hybrid vehicle includes the pure electric mode and the hybrid mode. The hybrid mode includes intelligent adaptive mode, pure electric priority mode, fuel priority mode, and SOC maintenance mode. Generally, the original target SOC corresponding to the hybrid mode is higher than that corresponding to the pure electric mode. However, the present disclosure does not limit the original target SOC corresponding to different hybrid modes. The original target SOC corresponding to the pure electric priority mode may be higher than that corresponding to the fuel priority mode, and vice versa.

The power-maintaining mode of the hybrid vehicle includes the intelligent power-maintaining mode and the mandatory power-maintaining mode. The core of the intelligent power-maintaining mode lies in maintaining the actual SOC of the vehicle within a preset target range. When the actual SOC is low, high power demand scenarios occur, or sudden acceleration takes place, the intelligent power-maintaining mode may be automatically activated to meet the continuous electric drive demand in specific scenarios and reduce the reliance on traditional internal combustion engines. The mandatory power-maintaining mode places more emphasis on maintaining the actual SOC stability to ensure that the loss of actual SOC remains within a set range or even lower. Generally, the original target SOC corresponding to the mandatory power-maintaining mode is higher than that corresponding to the intelligent power-maintaining mode.

The traveling modes of the hybrid vehicle include the Ecology, Conservation, Optimization (ECO) mode, the SPORT mode, and the COMFORT mode. The ECO mode is an economical mode where the vehicle prioritizes electric driving, and the engine is only started when necessary, thereby greatly saving fuel. In the SPORT mode, the engine runs for a long time to prioritize the traveling demands. The COMFORT mode is a normal hybrid mode where the vehicle intelligently manages the start and stop of the engine. Generally, the original target SOC corresponding to the SPORT mode is higher than that corresponding to the ECO mode and the COMFORT mode. This present disclosure does not limit the original target SOC corresponding to the ECO mode and the original target SOC corresponding to the COMFORT mode respectively. The original target SOC corresponding to the ECO mode may be higher than that corresponding to the COMFORT mode, and the original target SOC corresponding to the ECO mode may be lower than that corresponding to the COMFORT mode.

If the driver selects different types of vehicle modes simultaneously, the original target SOC of the hybrid vehicle is determined according to the preset target SOC determination strategy. The present disclosure does not limit the preset target SOC determination strategy. For example, the maximum target SOC among the original target SOCs corresponding to different types of vehicle modes may be determined as the original target SOC of the hybrid vehicle, or the minimum target SOC among the original target SOCs corresponding to different types of vehicle modes may be determined as the original target SOC of the hybrid vehicle, or the original target SOC of the hybrid vehicle may be determined by combining the original target SOCs corresponding to different types of vehicle modes.

After obtaining the state information of the hybrid vehicle, for the specific process of obtaining the charging coefficient of the hybrid vehicle based on the state information, reference may be made to the following embodiments, which will not be explained here.

Step 220: Based on the charging coefficient, an original generation power of the hybrid vehicle is limited to obtain a first generation power, wherein the original generation power is determined based on a required power of the hybrid vehicle, and the required power is determined based on an opening degree of an accelerator pedal of the hybrid vehicle.

The required power of the hybrid vehicle is determined based on the opening degree of the accelerator pedal of the hybrid vehicle. The greater the opening degree of the accelerator pedal, the higher the required power of the hybrid vehicle; conversely, the smaller the opening degree of the accelerator pedal, the lower the required power of the hybrid vehicle. The opening degree of the accelerator pedal indicates the degree to which the accelerator pedal is depressed. Specifically, the opening degree of the accelerator pedal indicates the ratio of the vertical distance from the accelerator pedal to the vehicle floor when the accelerator pedal is depressed to the vertical distance from the accelerator pedal to the vehicle floor when the accelerator pedal is not depressed. By depressing the accelerator pedal by the driver during traveling, the corresponding required power of the hybrid vehicle may be obtained based on the opening degree of the accelerator pedal. The required power of the hybrid vehicle indicates the engine power of the hybrid vehicle corresponding to the driver's demand.

Based on the required power of the hybrid vehicle, the original generation power required to operate the engine of the hybrid vehicle is determined. The mapping relationship between the original generation power of the hybrid vehicle and the required power of the hybrid vehicle may be referred to in Table 2 below.

**Table 2**

| | | | | | | | |
|---|---|---|---|---|---|---|---|
| Power demand | 10 kw | 20 kw | 50 kw | 80 kw | 100 kw | 120 kw | 150 kw |
| Original generation power | 12 kw | 23 kw | 55 kw | 85 kw | 110 kw | 130 kw | 165 kw |

According to Table 2 above, when the required power of the hybrid vehicle is 10 kw, 20 kw, 50 kw, 80 kw, 100 kw, 120 kw, and 150 kw, the corresponding original generation power of the hybrid vehicle is 12 kw, 23 kw, 55 kw, 85 kw, 110 kw, 130 kw, and 165 kw, respectively. For the mapping relationship between the original generation power and the required power at each of the above nodes, the original generation power of the hybrid vehicle corresponding to the required power may be determined based on the linear mapping relationship between two adjacent nodes. For example, when the required power of the hybrid vehicle is 15 kw, the original generation power of the hybrid vehicle corresponding to the required power of 15 kw of the hybrid vehicle is determined to be 17.5 kw based on the linear mapping relationship between the original generation power corresponding to the required power of 10 kw of the hybrid vehicle and the original generation power corresponding to the required power of 20 kw of the hybrid vehicle.

After obtaining the original generation power of the hybrid vehicle, the original generation power is limited based on the charging coefficient of the hybrid vehicle to obtain the first generation power.

In some embodiments, step 220 includes sub-step 221 (not shown in the figure).

Sub-step 221: The charging coefficient is multiplied by the original generation power to obtain the first generation power.

By limiting the original generation power, the economy of the hybrid vehicle can be improved, the electric balance performance of the hybrid vehicle under various road conditions can be optimized, and the vehicle performance can be enhanced.

Step 230: The first generation power is limited based on an engine speed of the hybrid vehicle to obtain a second power generation, wherein the engine speed is determined based on a traveling speed of the hybrid vehicle and the opening degree of the accelerator pedal.

The mapping relationship between the engine speed, the traveling speed of the hybrid vehicle, and the opening degree of the accelerator pedal may be referred to in Table 3 below.

**Table 3**

| | Opening degree of the accelerator pedal | | | |
|---|---|---|---|---|
| Speed | 10% | 30% | 50% | 100% |
| 20 km/h | 1200 rpm | 1200 rpm | 1200 rpm | 1200 rpm |
| 50 km/h | 1300 rpm | 1400 rpm | 1500 rpm | 1600 rpm |
| 80 km/h | 1700 rpm | 1750 rpm | 1800 rpm | 2100 rpm |

According to Table 3 above, when the traveling speed of the hybrid vehicle is 20 km/h, the engine speed remains unaffected by changes in the opening degree of the accelerator pedal, consistently maintaining 1200 rpm. When the traveling speed of the hybrid vehicle exceeds 20 km/h, the engine speed is affected by changes in the opening degree of the accelerator pedal. As the opening degree of the accelerator pedal increases, the engine speed rises accordingly, and as the traveling speed of the hybrid vehicle increases, the engine speed also rises.

For the mapping relationships between the engine speed, the traveling speed of the hybrid vehicle, and the opening degree of the accelerator pedal among the aforementioned nodes, the engine speed may be determined based on the linear mapping relationship between two adjacent nodes. For example, the engine speed corresponding to each opening node may be determined first based on the traveling speed of the hybrid vehicle, and then the engine speed may be determined based on the linear mapping relationship between two adjacent opening degree nodes. Similarly, the engine speed corresponding to each traveling speed node may be determined first based on the opening degree of the accelerator pedal, and then the engine speed may be determined based on the linear mapping relationship between two adjacent traveling speed nodes.

For example, when the traveling speed of the hybrid vehicle is 50 km/h and the opening degree of the accelerator pedal is 20%, the engine speed is determined to be 1350 rpm based on the linear mapping relationship between the engine speed corresponding to the opening degree of the accelerator pedal of 10% and the engine speed corresponding to the opening degree of the accelerator pedal of 20%. Another example is that if the traveling speed of the hybrid vehicle is 35k m/h and the opening degree of the accelerator pedal is 20%, the engine speed corresponding to the opening degree of the accelerator pedal of 10% may be determined to be 1250 rpm, and the engine speed corresponding to the opening degree of the accelerator pedal of 30% may be determined to be 1300 rpm based on the traveling speed. Then, according to the linear mapping relationship between the opening degrees of the accelerator pedal of 10% and 30%, the engine speed corresponding to the opening degree of the accelerator pedal of 20% is determined to be 1275 rpm. That is, when the traveling speed of the hybrid vehicle is 35 km/h and the opening degree of the accelerator pedal is 20%, the engine speed is 1275 rpm.

After the engine speed of the hybrid vehicle is determined based on the mapping relationship between the traveling speed of the vehicle, the opening degree of the accelerator pedal, and the engine speed, the first generation power is limited based on the engine speed to obtain the second generation power.

In some embodiments, step 230 includes at least one of sub-steps 231 to 232 (not shown in the figure).

Sub-step 231: The generation power corresponding to the engine speed is obtained based on the engine speed.

The mapping relationship between the engine speed and the corresponding generation power may be referred to in Table 4 below.

**Table 4**

| | | | | |
|---|---|---|---|---|
| Engine speed | 1200 rpm | 1500 rpm | 1700 rpm | 2100 rpm |
| Generation power | 12 kw | 50 kw | 60 kw | 70 kw |

According to Table 4 above, when the engine speed of the hybrid vehicle is 1200 rpm, 1500 rpm, 1700 rpm, and 2100 rpm, the corresponding generation power is 12 kw, 50 kw, 60 kw, and 70 kw, respectively. For the mapping relationship between the engine speed and the generation power at each of the above nodes, the generation power corresponding to the engine speed may be determined based on the linear mapping relationship between two adjacent nodes. For example, when the engine speed of the hybrid vehicle is 1350 rpm, the generation power corresponding to the engine speed of 1350 rpm may be determined as 31 kw based on the linear mapping relationship between the generation power corresponding to the engine speed of 1200 rpm and the generation power corresponding to the engine speed of 1500 rpm.

Therefore, based on the mapping relationship between the engine speed and the generation power at each node, as well as the linear mapping relationship between nodes, the generation power corresponding to the engine speed may be obtained based on the engine speed.

Sub-step 232: The minimum value between the first generation power and the generation power corresponding to the engine speed is determined as the second generation power.

Illustratively, if the first generation power is greater than the generation power corresponding to the engine speed, then the generation power corresponding to the engine speed is determined as the second generation power. If the first generation power is less than the generation power corresponding to the engine speed, then the first generation power is determined as the second generation power.

By limiting the first generation power through the engine speed, the Noise, Vibration, Harshness (NVH) performance of the hybrid vehicle can be improved, further enhancing the performance of the vehicle.

Step 240: A torque gradient of the hybrid vehicle is determined based on the second generation power and the engine speed, wherein the hybrid vehicle is configured to travel based on the second generation power and the torque gradient.

In some embodiments, the hybrid vehicle may be traveling directly based on the aforementioned second generation power. In other embodiments, the torque gradient of the hybrid vehicle is determined based on the second generation power and the engine speed, allowing the engine torque of the hybrid vehicle to reach the target torque as soon as possible, thereby improving the power-generation efficiency of the hybrid vehicle.

The torque gradient is used to represent the change rate of the engine torque. The hybrid vehicle is traveling based on the second generation power and the torque gradient. Specifically, the hybrid vehicle is configured to travel based on the second generation power and the engine torque obtained based on the torque gradient.

In some embodiments, step 240 includes at least one of sub-steps 241-242 (not shown in the figure).

Sub-step 241: The requested torque corresponding to the second generation power is obtained based on the second generation power and the engine speed.

The requested torque is equal to a product of 9550 and the second generation power/engine speed. Based on the second generation power and the engine speed, the requested torque corresponding to the second generation power is calculated.

Sub-step 242: The torque gradient of the hybrid vehicle is determined from the requested torque corresponding to the second generation power according to the preset mapping relationship between the requested torque and the torque gradient.

For the mapping relationship between the requested torque and the torque gradient, reference may be made to Table 5 below.

**Table 5**

| | | | | | |
|---|---|---|---|---|---|
| Requested torque | 20 Nm | 60 Nm | 80 Nm | 160 Nm | 200 Nm |
| Torque gradient | 50 Nm/s | 100 Nm/s | 200 Nm/s | 500 Nm/s | 500 Nm/s |

According to Table 5 above, when the requested torque is 20 Nm, 60 Nm, 80 Nm, 160 Nm, and 200 Nm, the corresponding torque gradients are 50 Nm/s, 100 Nm/s, 200 Nm/s, 500 Nm/s, and 500 Nm/s, respectively. For the mapping relationship between the requested torque and the torque gradient at each of the above nodes, the torque gradient corresponding to the requested torque may be determined based on the linear mapping relationship between two adjacent nodes. For example, when the requested torque is 40 Nm, the torque gradient corresponding to the requested torque of 40 Nm may be determined as 75 Nm/s based on the linear mapping relationship between the torque gradient corresponding to the requested torque of 20 Nm and the torque gradient corresponding to the requested torque of 60 Nm.

Therefore, based on the mapping relationship between the requested torque and the torque gradient at each node, as well as the linear mapping relationship between nodes, the torque gradient corresponding to the requested torque may be obtained based on the requested torque corresponding to the second generation power.

By determining the torque gradient of the hybrid vehicle based on the second generation power and the engine speed, the engine torque of the hybrid vehicle can reach the target torque as soon as possible, improving the power-generation efficiency of the hybrid vehicle and allowing the vehicle to achieve better performance.

According to the technical solutions according to the embodiments of the present disclosure, when the hybrid vehicle is traveling, the state information of the hybrid vehicle is promptly obtained, and the optimal power generation output of the hybrid vehicle is determined based on the state information of the hybrid vehicle. Compared to the electric balance control methods in related technologies, which do not consider the road conditions of the vehicle, the generation power is determined based on the state information of the hybrid vehicle in the present disclosure, taking into account the real-time road condition information. This optimizes the electric balance performance of the hybrid vehicle under various road conditions and enhances the performance of the vehicle. Furthermore, based on the output generation power and the engine speed of the hybrid vehicle, the torque gradient is determined to enable the engine torque of the hybrid vehicle to reach the target torque as soon as possible, thereby improving the power-generation efficiency of the hybrid vehicle and achieving better performance for the vehicle.

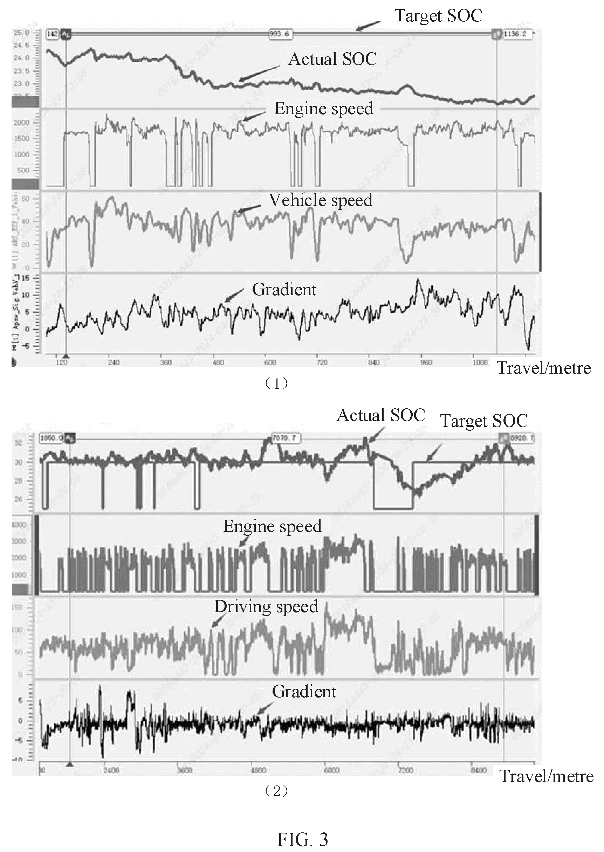

FIG. 3 shows a schematic diagram of vehicle states under different road conditions. FIG. 3(1) illustrates the vehicle state in steep mountain road condition, with the original target SOC being 25% of the maximum SOC of the hybrid vehicle. FIG. 3(2) shows the vehicle state in national road condition, with the original target SOC being 30% of the maximum SOC of the hybrid vehicle. It can be seen that the electric balance performance of the hybrid vehicle is better when traveling on the national road than when traveling on the steep mountain road. Furthermore, when the hybrid vehicle is traveling on the steep mountain road, the engine speed is limited according to the electric balance control method in the present disclosure, allowing the hybrid vehicle to maintain the electric balance as much as possible when the gradient changes significantly, keeping the actual SOC of the vehicle within a preset downward range and improving the performance of the vehicle.

In some embodiments, step 210 includes at least one of sub-steps 211 to 215 (not shown in the figure).

Sub-step 211: The first charging coefficient is obtained based on the difference between the actual SOC of the hybrid vehicle and the target SOC of the hybrid vehicle and the traveling speed.

In some embodiments, if the difference between the actual SOC and the target SOC is greater than the first threshold, the first charging coefficient is determined to be a first numerical value; if the difference between the actual SOC and the target SOC is equal to the first threshold, the first charging coefficient is determined based on the traveling speed; or if the difference between the actual SOC and the target SOC is less than the first threshold, the first charging coefficient is determined to be a second numerical value.

The present disclosure does not limit the specific values of the first threshold, the first numerical value, and the second numerical value.

Illustratively, the first threshold is 0, the first numerical value is 1, and the second numerical value is -1. If the difference between the actual SOC and the target SOC is greater than 0, the first charging coefficient is determined to be 1; if the difference is equal to 0, the first charging coefficient is determined based on the traveling speed; or if the difference is less than 0, the first charging coefficient is determined to be -1.

The mapping relationship between the first charging coefficient, the difference between the actual SOC and the target SOC of the hybrid vehicle, and the traveling speed may be referred to in Table 6 below.

**Table 6**

| | Speed | | | | |
|---|---|---|---|---|---|
| Difference | 10 km/h | 50 km/h | 80 km/h | 100 km/h | 120 km/h |
| Δ>0 | 1 | 1 | 1 | 1 | 1 |
| Δ=0 | 1 | 1 | 0 | 0 | -1 |
| Δ<0 | -1 | -1 | -1 | -1 | -1 |

According to Table 6 above, when the difference between the actual SOC and the target SOC is greater than 0, the first charging coefficient is 1; when the difference is less than 0, the first charging coefficient is -1. When the difference is equal to 0, if the traveling speed of the hybrid vehicle is less than 50 km/h, the first charging coefficient is 1; if the traveling speed is within the range of 80-100 km/h, the first charging coefficient is 0; or if the traveling speed is greater than 120 km/h, the first charging coefficient is -1. If the traveling speed of the hybrid vehicle is within the range of 50-80 km/h, the first charging coefficient is determined based on the linear mapping relationship between the first charging coefficient corresponding to the traveling speed of 50 km/h and the first charging coefficient corresponding to the traveling speed of 80 km/h. If the traveling speed is within the range of 100-120 km/h, the first charging coefficient is determined based on the linear mapping relationship between the first charging coefficient corresponding to the traveling speed of 100 km/h and the first charging coefficient corresponding to the traveling speed of 120 km/h.

For example, in the case where the difference between the actual SOC and the target SOC is equal to 0, when the traveling speed of the hybrid vehicle is 65 km/h, the first charging coefficient is determined as 0.5 according to the linear mapping relationship. When the traveling speed of the hybrid vehicle is 110 km/h, the first charging coefficient is determined as -0.5 according to the linear mapping relationship.

Sub-step 212: The second charging coefficient is obtained based on the actual SOC of the hybrid vehicle and its traveling speed.

In some embodiments, if the SOC proportion corresponding to the actual SOC is greater than or equal to a first proportion, the second charging coefficient is determined to be a first numerical value. The SOC proportion refers to the proportion of the actual SOC relative to the maximum SOC of the hybrid vehicle. If the SOC proportion is less than the first proportion and greater than a second proportion, the second charging coefficient is determined based on the traveling speed. If the SOC proportion is less than or equal to the second proportion, the second charging coefficient is determined to be a second numerical value.

The present disclosure does not limit the specific values of the first proportion, the second proportion, the first numerical value, and the second numerical value. The actual SOC whose SOC proportion is greater than or equal to the first proportion may be referred to as the high SOC, the actual SOC whose SOC proportion is less than the first proportion and greater than the second proportion may be referred to as the medium SOC, and the actual SOC whose SOC proportion is less than or equal to the second proportion may be referred to as the low SOC.

Illustratively, the first proportion is 30%, the second proportion is 18%, the first numerical value is 1, and the second numerical value is -1. If the SOC proportion corresponding to the actual SOC is greater than or equal to 30%, the second charging coefficient is determined to be 1; if the SOC proportion is less than 30% and greater than 18%, the second charging coefficient is determined based on the traveling speed; or if the SOC proportion is less than or equal to 18%, the second charging coefficient is determined to be -1.

The mapping relationship between the second charging coefficient, the actual SOC of the hybrid vehicle, and its traveling speed may be referred to in Table 7 below.

**Table 7**

| | Speed | | | | |
|---|---|---|---|---|---|
| Actual SOC | 10 km/h | 50 km/h | 80 km/h | 100 km/h | 120 km/h |
| High SOC | 1 | 1 | 1 | 1 | 1 |
| Medium SOC | 1 | 1 | 0 | 0 | -1 |
| Low SOC | -1 | -1 | -1 | -1 | -1 |

According to Table 7 above, when the actual SOC is the high SOC, the second charging coefficient is 1; when the actual SOC is the low SOC, the second charging coefficient is -1. When the actual SOC is the medium SOC, if the traveling speed of the hybrid vehicle is less than 50 km/h, the second charging coefficient is 1; if the traveling speed of the hybrid vehicle is within the speed range of 80-100 km/h, the second charging coefficient is 0; or if the traveling speed of the hybrid vehicle is greater than 120 km/h, the second charging coefficient is -1. If the traveling speed of the hybrid vehicle is within the speed range of 50-80 km/h, the second charging coefficient is determined based on the linear mapping relationship between the second charging coefficient corresponding to the traveling speed of 50 km/h and the second charging coefficient corresponding to the traveling speed of 80 km/h. If the traveling speed of the hybrid vehicle is within the speed range of 100-120 km/h, the second charging coefficient is determined based on the linear mapping relationship between the second charging coefficient corresponding to the traveling speed of 100 km/h and the second charging coefficient corresponding to the traveling speed of 120 km/h.

For example, when the actual SOC is the medium SOC, and the traveling speed of the hybrid vehicle is 65 km/h, the second charging coefficient may be determined as 0.5 based on the linear mapping relationship. When the traveling speed of the hybrid vehicle is 110 km/h, the second charging coefficient may be determined as -0.5 based on the linear mapping relationship.

Sub-step 213: The third charging coefficient is obtained based on the cell temperature and the traveling speed of the hybrid vehicle.

In some embodiments, if the cell temperature exceeds the first temperature threshold, the third charging coefficient is set to a first numerical value; if the cell temperature is less than or equal to the first temperature threshold and greater than or equal to a second temperature threshold, the third charging coefficient is determined based on the traveling speed; or if the cell temperature is less than the second temperature threshold, the third charging coefficient is set to a second numerical value.

The present disclosure does not limit the specific values of the first temperature threshold, the second temperature threshold, the first numerical value, and the second numerical value.

Illustratively, the first temperature threshold is 10 °C, the second temperature threshold is -10 °C, the first numerical value is 1, and the second numerical value is -1. If the cell temperature is greater than 10 °C, the third charging coefficient is determined to be 1; if the cell temperature is less than or equal to 10 °C and greater than or equal to -10 °C, the third charging coefficient is determined based on the traveling speed; or if the cell temperature is less than -10 °C, the third charging coefficient is determined to be -1.

The mapping relationship between the third charging coefficient, the cell temperature of the hybrid vehicle, and the traveling speed of the hybrid vehicle may be referred to in Table 8 below.

**Table 8**

| | speed | | | | |
|---|---|---|---|---|---|
| Cell temperature | 10 km/h | 50 km/h | 80 km/h | 100 km/h | 120 km/h |
| >10 °C | 1 | 1 | 1 | 1 | 1 |
| 0 | 1 | 1 | 0 | 0 | -1 |
| <0 °C | -1 | -1 | -1 | -1 | -1 |

According to Table 8 above, when the cell temperature is greater than 10 °C, the third charging coefficient is 1; when the cell temperature is less than -10 °C, the third charging coefficient is -1. When the cell temperature is less than or equal to 10 °C and greater than or equal to -10 °C, if the traveling speed of the hybrid vehicle is less than 50 km/h, the third charging coefficient is 1; if the traveling speed of the hybrid vehicle is within the speed range of 80-100 km/h, the third charging coefficient is 0; or if the traveling speed of the hybrid vehicle is greater than 120 km/h, the third charging coefficient is -1. If the traveling speed of the hybrid vehicle is within the speed range of 50-80 km/h, the third charging coefficient is determined based on the linear mapping relationship between the third charging coefficient corresponding to the traveling speed of 50 km/h and the third charging coefficient corresponding to the traveling speed of 80 km/h. If the traveling speed of the hybrid vehicle is within the speed range of 100-120 km/h, the third charging coefficient is determined based on the linear mapping relationship between the third charging coefficient corresponding to the traveling speed of 100 km/h and the third charging coefficient corresponding to the traveling speed of 120 km/h.

For example, when the cell temperature is less than or equal to 10 °C and greater than or equal to -10 °C, and the traveling speed of the hybrid vehicle is 65 km/h, the second charging coefficient can be determined as 0.5 based on the linear mapping relationship. When the traveling speed of the hybrid vehicle is 110 km/h, the second charging coefficient can be determined as -0.5 based on the linear mapping relationship.

Sub-step 214: The fourth charging coefficient is obtained based on the actual SOC of the hybrid vehicle and the gradient of the road condition.

In some embodiments, if the SOC proportion corresponding to the actual SOC is greater than or equal to a first proportion, the fourth charging coefficient is determined to be a first numerical value. The SOC proportion refers to the proportion of the actual SOC relative to the maximum SOC of the hybrid vehicle. If the SOC proportion is less than the first proportion and greater than a second proportion, the fourth charging coefficient is determined based on the gradient. If the SOC proportion is less than or equal to the second proportion, the fourth charging coefficient is determined to be a second numerical value.

The present disclosure does not limit the specific values of the first proportion, the second proportion, the first numerical value, and the second numerical value. The actual SOC whose SOC proportion is greater than or equal to the first proportion may be referred to as the high SOC, the actual SOC whose SOC proportion is less than the first proportion and greater than the second proportion may be referred to as the medium SOC, and the actual SOC whose SOC proportion is less than or equal to the second proportion may be referred to as the low SOC.

Illustratively, the first proportion is 30%, the second proportion is 18%, the first numerical value is 1, and the second numerical value is -1. If the SOC proportion corresponding to the actual SOC is greater than or equal to 30%, the fourth charging coefficient is determined to be 1; if the SOC proportion is less than 30% and greater than 18%, the fourth charging coefficient is determined based on the gradient; or if the SOC proportion is less than or equal to 18%, the fourth charging coefficient is determined to be -1.

The mapping relationship between the fourth charging coefficient and the actual SOC of the hybrid vehicle, as well as the gradient of the road condition for the hybrid vehicle, may be referred to in Table 9 below.

**Table 9**

| | Gradient | | | | |
|---|---|---|---|---|---|
| Actual SOC | -5 | 0 | 5 | 8 | 10 |
| High SOC | 1 | 1 | 1 | 1 | 1 |
| Medium SOC | 1 | 1 | 0 | 0 | -1 |
| Low SOC | -1 | -1 | -1 | -1 | -1 |

According to Table 9 above, when the actual SOC is the high SOC, the fourth charging coefficient is 1; when the actual SOC is the low SOC, the fourth charging coefficient is -1. When the actual SOC is the medium SOC, if the gradient of the road condition of the hybrid vehicle is less than 0, the fourth charging coefficient is 1; if the gradient of the road condition of the hybrid vehicle is within the range of 5-8 degrees, the fourth charging coefficient is 0; or if the gradient of the road condition of the hybrid vehicle is greater than 10 degrees, the fourth charging coefficient is -1. If the gradient of the road condition of the hybrid vehicle is within the range of 0-5 degrees, the fourth charging coefficient is determined based on the linear mapping relationship between the fourth charging coefficient corresponding to the gradient of 0 and the fourth charging coefficient corresponding to the gradient of 5. If the gradient of the road condition of the hybrid vehicle is within the range of 8-10 degrees, the fourth charging coefficient is determined based on the linear mapping relationship between the fourth charging coefficient corresponding to the gradient of 8 and the fourth charging coefficient corresponding to the gradient of 10.

For example, in the case where the actual SOC is the medium SOC, when the gradient of the road condition of the hybrid vehicle is 2.5 degrees, the fourth charging coefficient may be determined to be 0.5 based on the linear mapping relationship; and when the gradient of the road condition of the hybrid vehicle is 9 degrees, the fourth charging coefficient can be determined to be -0.5 based on the linear mapping relationship.

Sub-step 215: The charging coefficient is obtained based on the first, second, third, and fourth charging coefficients.

The actual and target SOCs, the traveling speed, the cell temperature, and the gradient of the road condition of the hybrid vehicle are used in considering the state information of the hybrid vehicle, the first, second, third, and fourth charging coefficients are obtained respectively. Subsequently, the charging coefficient of the hybrid vehicle is determined. This allows to determine the most suitable charging coefficient based on the real-time state of the vehicle, thereby controlling the traveling of the hybrid vehicle based on the charging coefficient, effectively optimizing the electrical balance performance of the hybrid vehicle, and enhancing its overall performance.

In some embodiments, the first charging coefficient, the second charging coefficient, the third charging coefficient, and the fourth charging coefficient are averaged, and the average value is determined as the charging coefficient.

In some embodiments, the maximum value among the first charging coefficient, the second charging coefficient, the third charging coefficient, and the fourth charging coefficient is determined as the charging coefficient.

In some embodiments, the minimum value among the first charging coefficient, the second charging coefficient, the third charging coefficient, and the fourth charging coefficient is determined as the charging coefficient.

Through the aforementioned methods, the optimal charging coefficient is obtained based on the charging coefficients of the four dimensions, aiming to optimize the electric balance performance of the hybrid vehicle under various road conditions as much as possible, thereby enhancing the performance of the hybrid vehicle.

The following is an embodiment of the apparatus of the present disclosure, which may be used to implement the method embodiments of the present disclosure. For details not disclosed in the apparatus embodiments of the present disclosure, please refer to the method embodiments of the present disclosure.

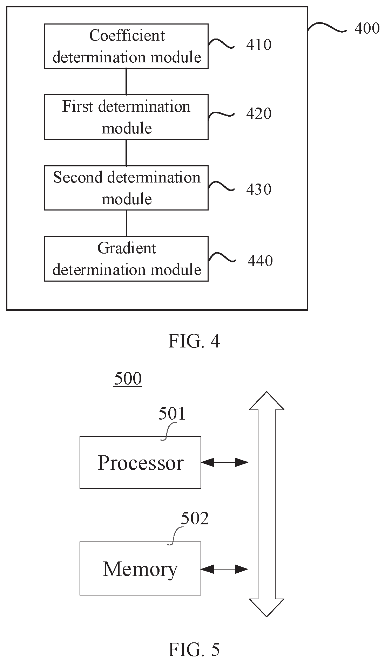

Please refer to FIG. 4, which illustrates a block diagram of an electric balance control apparatus for a hybrid vehicle according to some embodiments of the present disclosure. The apparatus has the function of implementing the above-mentioned electric balance control method for the hybrid vehicle, and this function can be realized by hardware or by hardware executing corresponding software. The apparatus may be the server introduced above, or may be set up in the server. As shown in FIG. 4, the apparatus 400 may include: a coefficient determination module 410, a first determination module 420, a second determination module 430, and a gradient determination module 440.

The coefficient determination module 410 is configured to obtain a charging coefficient of the hybrid vehicle based on state information of the hybrid vehicle when the hybrid vehicle is traveling, wherein the charging coefficient is indicative of a charging efficiency of the hybrid vehicle.

The first determination module 420 is configured to limit an original generation power of the hybrid vehicle based on the charging coefficient to obtain a first generation power, wherein the original generation power is obtained based on a required power of the hybrid vehicle, the required power being determined based on an opening degree of an accelerator pedal of the hybrid vehicle.

The second determination module 430 is configured to limit the first generation power based on an engine speed of the hybrid vehicle to obtain a second generation power, wherein the engine speed is determined based on an a traveling speed of the hybrid vehicle and the opening degree of the accelerator pedal.

The gradient determination module 440 is configured to determine a torque gradient of the hybrid vehicle based on the second generation power and the engine speed, wherein the hybrid vehicle is configured to travel based on the second generation power and the torque gradient.

In some embodiments, the coefficient determination module 410 is configured to: obtain a first charging coefficient based on a difference between an actual SOC of the hybrid vehicle and a target SOC and the traveling speed of the hybrid vehicle; obtain a second charging coefficient based on the actual SOC and the traveling speed; obtain a third charging coefficient based on a cell temperature and the traveling speed of the hybrid vehicle; obtain a fourth charging coefficient based on the actual SOC and a gradient of a road condition of the hybrid vehicle; and obtain the charging coefficient based on the first charging coefficient, the second charging coefficient, the third charging coefficient, and the fourth charging coefficient.

In some embodiments, the coefficient determination module 410 is configured to: take an average value of the first charging coefficient, the second charging coefficient, the third charging coefficient, and the fourth charging coefficient, and determine the average value as the charging coefficient; or determine a maximum value among the first charging coefficient, the second charging coefficient, the third charging coefficient, and the fourth charging coefficient as the charging coefficient; or determine a minimum value among the first charging coefficient, the second charging coefficient, the third charging coefficient, and the fourth charging coefficient as the charging coefficient.

In some embodiments, the first determination module 420 is configured to: multiply the charging coefficient by the original generation power to obtain the first generation power.

In some embodiments, the second determination module 430 is configured to: obtain a generation power corresponding to the engine speed based on the engine speed; and determine a minimum value between the first generation power and the generation power corresponding to the engine speed as the second generation power.

In some embodiments, the gradient determination module 440 is configured to: obtain a requested torque corresponding to the second generation power based on the second generation power and the engine speed; and determine the torque gradient of the hybrid vehicle from the requested torque corresponding to the second generation power according to a preset mapping relationship between the requested torque and the torque gradient.

It should be noted that the apparatus according to the above embodiments is exemplified only based on the division of the above functional modules when achieving its functions. In practical applications, the above functions may be allocated to different functional modules as needed, that is, the content structure of the apparatus may be divided into different functional modules to complete all or part of the functions described above. In addition, the apparatus according to the above embodiments and the method embodiments belong to the same concept, and the specific implementation process is detailed in the method embodiments, which will not be repeated here.

Please refer to FIG. 5, which illustrates a structural block diagram of a server 500 according to some embodiments of the present disclosure. The server 500 may be any electronic device capable of data computation, processing, and storage. The server 500 may be used to implement the electric balance control method for the hybrid vehicle according to the aforementioned embodiments.

Generally, the server 500 includes: a processor 501 and a memory 502.

The processor 501 may include one or more processing cores, such as a 4-core processor, an 8-core processor, and the like. The processor 501 may be implemented using at least one hardware form from digital signal processing (DSP), field programmable gate array (FPGA), or programmable logic array (PLA). The processor 501 may also include a main processor and a co-processor. The main processor is a processor used for processing data in the awake state, also known as a central processing unit (CPU). The co-processor is a low-power processor used for processing data in the standby state. In some embodiments, the processor 501 may be integrated with a graphics processing unit (GPU), which is responsible for rendering and drawing the content required to be displayed on the display screen. In some embodiments, the processor 501 may also include an AI processor, which is used for processing computational operations related to machine learning.

The memory 502 may include one or more computer-readable storage medium, which may be non-transitory. The memory 502 may also include the high-speed random access memory, as well as the non-volatile memory, such as one or more disk storage devices, flash memory storage devices. In some embodiments, the non-transitory computer-readable storage medium in the memory 502 are used to store one or more computer programs that are configured to be run by one or more processors to perform the aforementioned electric balance control method for the hybrid vehicle.

Those skilled in the art can understand that the structure shown in FIG. 5 does not constitute a limitation on the server 500, and may include more or fewer components than illustrated, or combine certain components, or adopt different component arrangements.

In the illustrative embodiments, a computer-readable storage medium is also provided. The computer-readable storage medium stores one or more computer programs, which when run by the processor of the server, cause the processor to perform the aforementioned electric balance control method for the hybrid vehicle. Optionally, the aforementioned computer-readable storage medium may be read-only memory (ROM), random access memory (RAM), compact disc read-only memory (CD-ROM), magnetic tape, floppy disk, optical data storage device, and the like.

In exemplary embodiments, a computer program product is also provided. The computer program includes one or more computer programs stored in a computer-readable storage medium. The processor of the server reads the one or more computer programs from the computer-readable storage medium, and runs the one or more computer programs, causing the server to perform the aforementioned electric balance control method for the hybrid vehicle.

It should be understood that "multiple" mentioned in this document refers to two or more. "And/or" describes the association relationship between associated objects, indicating that there can be three types of relationships. For example, A and/or B may represent three situations: A exists alone, A and B exist simultaneously, and B exists alone. The character "/" generally indicates that the associated objects before and after it are in an "or" relationship. In addition, the step numbers described in this document only exemplarily show one possible execution sequence among steps. In some other embodiments, the above steps may not be executed in numerical order. For example, two steps with different numbers may be executed simultaneously, or two steps with different numbers may be executed in an order opposite to the one shown in the diagram. This is not limited by the embodiments of the present disclosure.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. An electric balance control method for a hybrid vehicle, performed by a server, the method comprising:
obtaining a charging coefficient of the hybrid vehicle based on state information of the hybrid vehicle when the hybrid vehicle is traveling, wherein the charging coefficient is indicative of a charging efficiency of the hybrid vehicle;
limiting an original generation power of the hybrid vehicle based on the charging coefficient to obtain a first generation power, wherein the original generation power is determined based on a required power of the hybrid vehicle, the required power being determined based on an opening degree of an accelerator pedal of the hybrid vehicle;
limiting the first generation power based on an engine speed of the hybrid vehicle to obtain a second generation power, wherein the engine speed is determined based on a traveling speed of the hybrid vehicle and the opening degree of the accelerator pedal; and
determining a torque gradient of the hybrid vehicle based on the second generation power and the engine speed, wherein the hybrid vehicle is configured to travel based on the second generation power and the torque gradient.

2. The method according to claim 1, wherein obtaining the charging coefficient of the hybrid vehicle based on the state information of the hybrid vehicle comprises:
obtaining a first charging coefficient based on a difference between an actual state of charge (SOC) of the hybrid vehicle and a target SOC of the hybrid vehicle and the traveling speed of the hybrid vehicle;
obtaining a second charging coefficient based on the actual SOC and the traveling speed;
obtaining a third charging coefficient based on a cell temperature and the traveling speed of the hybrid vehicle;
obtaining a fourth charging coefficient based on the actual SOC and a gradient of a road condition of the hybrid vehicle; and
obtaining the charging coefficient based on the first charging coefficient, the second charging coefficient, the third charging coefficient, and the fourth charging coefficient.

3. The method according to claim 2, wherein obtaining the charging coefficient based on the first charging coefficient, the second charging coefficient, the third charging coefficient, and the fourth charging coefficient comprises:
taking an average value of the first charging coefficient, the second charging coefficient, the third charging coefficient, and the fourth charging coefficient, and determining the average value as the charging coefficient; or
determining a maximum value among the first charging coefficient, the second charging coefficient, the third charging coefficient, and the fourth charging coefficient as the charging coefficient; or
determining a minimum value among the first charging coefficient, the second charging coefficient, the third charging coefficient, and the fourth charging coefficient as the charging coefficient.

4. The method according to any one of claims 1 to 3, wherein limiting the original generation power of the hybrid vehicle based on the charging coefficient to obtain the first generation power comprises:
multiplying the charging coefficient by the original generation power to obtain the first generation power.

5. The method according to any one of claims 1 to 4, wherein limiting the first generation power based on the engine speed of the hybrid vehicle to obtain the second generation power comprises:
obtaining a generation power corresponding to the engine speed based on the engine speed; and
determining a minimum value between the first generation power and the generation power corresponding to the engine speed as the second generation power.

6. The method according to any one of claims 1 to 5, wherein determining the torque gradient of the hybrid vehicle based on the second generation power and the engine speed comprises:
obtaining a requested torque corresponding to the second generation power based on the second generation power and the engine speed; and
determining the torque gradient of the hybrid vehicle from the requested torque corresponding to the second generation power according to a preset mapping relationship between the requested torque and the torque gradient.

7. An electric balance control apparatus for a hybrid vehicle, comprising:
a coefficient determination module, configured to obtain a charging coefficient of the hybrid vehicle based on state information of the hybrid vehicle when the hybrid vehicle is traveling, wherein the charging coefficient is indicative of a charging efficiency of the hybrid vehicle;
a first determination module, configured to limit an original generation power of the hybrid vehicle based on the charging coefficient to obtain a first generation power, wherein the original generation power is determined based on a required power of the hybrid vehicle, the required power being determined based on an opening degree of an accelerator pedal of the hybrid vehicle;
a second determination module, configured to limit the first generation power based on an engine speed of the hybrid vehicle to obtain a second generation power, wherein the engine speed is determined based on a traveling speed of the hybrid vehicle and the opening degree of the accelerator pedal; and
a gradient determination module, configured to determine a torque gradient of the hybrid vehicle based on the second generation power and the engine speed, wherein the hybrid vehicle is configured to travel based on the second generation power and the torque gradient.

8. A server, comprising: a processor and a memory, wherein the memory stores one or more computer programs, which are loaded and run by the processor, to cause the processor to perform the electric balance control method for the hybrid vehicle according to any one of claims 1 to 6.

9. A computer-readable storage medium, storing one or more computer programs, wherein the one or more computer programs, when loaded and run by a processor, cause the processor to perform the electric balance control method for the hybrid vehicle according to any one of claims 1 to 6.

10. A computer program product, comprising: one or more computer programs, which are loaded and run by a processor, cause the processor to perform the electric balance control method for the hybrid vehicle according to any one of claims 1 to 6.
